# EUROPÄISCHE PATENTSCHRIFT

(11) **EP 3 914 568 B1**
(45) Veröffentlichungstag und Bekanntmachung des Hinweises auf die Patenterteilung: **15.02.2023**
(21) Anmeldenummer: 20700497.9
(22) Anmeldetag: 15.01.2020
(51) Int. Cl.: C04B 28/04, C04B 28/06, C04B 40/00

(54) **SCHNELL HÄRTENDE MINERALISCHE BINDEMITTELMISCHUNG**
FAST CURING MINERAL BINDER COMPOUND
MÉLANGE DE LIANT MINÉRAL À DURCISSEMENT RAPIDE

(30) Priorität: 18.01.2019 EP 19152549
(43) Veröffentlichungstag der Anmeldung: 01.12.2021
(73) Patentinhaber: Venator Germany GmbH, 47198 Duisburg (DE)
(72) Erfinder: HETCHE, Olaf, 48432 Rheine (DE)
(74) Vertreter: Thot, Norman Benjamin
(86) Internationale Anmeldenummer: PCT/EP2020/050858
(87) Internationale Veröffentlichungsnummer: WO 2020/148307

(56) Entgegenhaltungen:
- EP-A1- 0 579 063
- EP-A1- 0 858 981
- EP-A1- 2 774 902
- EP-A1- 3 260 258
- EP-B1- 0 579 063
- WO-A1-97/45379
- WO-A1-2018/003832
- JP-A- 2002 249 351
- JP-A- 2002 249 352
- JP-A- 2002 249 354
- US-A- 5 980 628

## Beschreibung

Die vorliegende Erfindung betrifft eine schnell härtende mineralische Bindemittelmischung und deren Verwendung.

In Bau- und Bauhilfsstoffen werden als Bindemittel hauptsächlich Portlandzemente, Calciumsulfate mit unterschiedlichen Kristallwassergehalten, Kalk, Tonerdezemente oder deren Gemische verwendet. Während portlandzementgebundene Baustoffe sich besonders in witterungsbelasteten Bereichen eignen, in denen eine hohe Frost/Tau-Wechselbeständigkeit sowie hohe Beständigkeit gegenüber atmosphärischen Einflüssen erforderlich ist, werden Calciumsulfat und Tonerdezement enthaltende Bauprodukte, bedingt durch deren mangelnde Witterungsbeständigkeit, hauptsächlich im Innenbereich von Gebäuden eingesetzt. Solche Produkte, deren Bindemittel auf Mischungen aus Tonerdezement, Calciumsulfaten, Kalk und/oder Portlandzement beruhen, zeichnen sich aber durch einen besonders hohen Frühfestigkeitsaufbau sowie in geeigneten Formulierungen durch ein hohes Wasserbindungsvermögen und somit einen hohen Selbsttrocknungseffekt aus.

Die Bauindustrie und insbesondere die bauchemische Industrie verwenden schnell erhärtende Produkte, denen eine schnell härtende mineralische Bindemittelmischung zu Grunde liegt. Für die schnell härtende mineralische Bindemittelmischung werden verschiedene Zusammensetzungen herangezogen. Dabei wird mindestens ein Zement auf Basis von Tonerdezement, auch Calcium-Aluminat-Zement mit variablem CaO:Al₂O₃ Verhältnis genannt, und/oder Calciumsulfoaluminat ggfs. auch im Gemisch mit Calciumsulfat-Hydrat Modifikationen wie CaSO₄, CaSO₄ × 0,5 H₂O und/oder CaSO₄ x 2 H₂O und/oder weiteren hydraulisch erhärtenden Bindemitteln auf Zementbasis gemäß EN 197-1 verwendet. Diese mineralische Bindemittelmischungen können weiterhin CaO oder Ca(OH)₂ enthalten.

Diese Bindemittelmischungen können vorteilhaft zur Herstellung einer Baustoffmischung, enthaltend weiterhin -dem Fachmann bekannte- Füllstoffe und Leichtfüllstoffe, Abbindeverzögerer, Abbindebeschleuniger, dispergierbare Kunststoffpulver, Entschäumer, und/ oder Luftporenmittel, Verflüssiger, Stabilisatoren, Wasserretentionsmittel sowie die Rheologie der Baustoffmischung beeinflussende Additive sowie ggf. weitere Additive, wie sie dem Fachmann bekannt sind, verwendet werden.

In mineralischen hydraulischen Bindemittelmischungen können Abbindebeschleuniger- und/oder -verzögerer durch Zumischen im trockenen wie auch gelöstem Zustand als Einzelkomponenten sowie als Mischungen der Einzelkomponenten eingesetzt werden. Als Erstarrungs- und Abbindebeschleuniger werden Einzelkomponenten oder Mischungen von Einzelkomponenten dem Fachmann gut bekannte Alkali und/oder Erdalkalisalze eingesetzt. Diese Gruppe beinhaltet auch organische Salzverbindungen wie Carbonsäure-, Hydoxycarbonsäuresalze, Cyanate, usw.

Insbesondere für schnell erhärtende Bindemittelmischungen enthaltend Calciumaluminat in wechselndem CaO:Al₂O₃ Verhältnis, sowie Calciumsulfoaluminat und/oder Mischungen derselben enthaltende Bindemittelmischungen werden Beschleunigeradditive enthaltend Lithiumsalze wie Lithiumcarbonat, Lithiumhydroxid, Lithiumsulfat usw. sowie Mischungen derselben, ggf. gemeinsam mit weiteren Beschleunigern oder Verzögerern, zugesetzt, um die gewünschten Eigenschaften der Bindemittelmischung, wie Verarbeitungszeit, Erhärtungsdauer, Erstarrungszeiten, Festigkeitsentwicklung und schnelle Trocknung z.B. durch mineralogische Wasserbindung zu gewährleisten.

Durch die Verwendung von Lithiumsalzen für die Herstellung von Batterien für mobile Elektronik und Fahrzeuge nimmt der Bedarf an Lithiumsalzen für Nicht-Bauanwendungen stetig zu, sodass Preise und Verfügbarkeiten für die Herstellung von Baustoffen zunehmend kritisch werden.

JP 2002 249352 A offenbart die Verwendung von alkalifreien Beschleunigern auf Zirkonium(IV) oder Titanium(IV) Basis, nämlich z.B. Zirkoniumsulfat-Tetrahydrat, Zirkonium-Tetrachlorid, Zirkonium-Dichlorid-Oktahydrat und Zirkonium-Trichlorid in Kombination mit Kalziumaluminat und ggf. einer Ca- oder Al-haltigen Komponente als Zusatzmittel für Portland- oder Tonerdezement.

WO 97/45379 A1 offenbart im Beispiel C eine Bindemittelmischung aus 50-100 T CAC, 20-70 T Gips oder Anhydrit, 5-40 T Kalk oder Kalkhydrat, 0-4 T Beschleuniger und 0-4 T Entschleuniger. Der Beschleuniger wird hergestellt aus einer Mischung von 50-200 T Natriumchlorid oder Alkali, 50 - 200 T Lithiumhydrat oder Lithiumchlorid, 5 - 400 T Bentonit. Die Bindemittelmischung wird mit Sand und Kies zu Shotcrete vermengt, der beim Tunnelbau Verwendung findet.

WO 2018/003832 A1 offenbart im Beispiel 5 eine Bindemittelmischung aus 100 T CAC, 3 T CaSO4, 4 T Lithiumkarbonat Beschleuniger und 4 T Kalziumlaktat Beschleuniger, die mit 200 T Natursand zu einem Baustoff vermischt wird, der durch 3D-Druck verarbeitet wird.

Aufgabe der vorliegenden Erfindung war es daher, eine Alternative zu den bisher verwendeten Lithiumverbindungen als Beschleunigerzumischung und die Verwendung derselben für schnell erhärtende Bindemittelmischungen bereitzustellen.

Diese Aufgabe wurde gelöst durch eine schnell härtende mineralische Bindemittelmischung enthaltend einen Beschleuniger auf Zirconium(IV) Basis, Zement enthaltend eine oder mehrere Komponenten ausgewählt aus den Verbindungen 3 CaO * Al₂O₃, 12CaO ^{∗} 7Al₂O₃, CaO ^{∗} Al₂O₃, CaO ^{∗} 2Al₂O₃, CaO ^{∗} 6Al₂O₃ und/oder 4CaO ^{∗} 3Al₂O₃ ^{∗} SO₃, einen Sulfatträger in einem Anteil von 15 bis 80 Gew.-%, bevorzugt 15 bis 70 Gew.-%, besonders bevorzugt 25 bis 50 Gew.-%, optional ein oder mehrere alkalische Komponente, und optional ein oder mehrere Additive. Bevorzugt verwendet das schnell härtende mineralische Bindemittelmischung Zirconiumnitrat (Zr(NO₃)₄), Zirconium(IV)-Sulfat (Zr(SO₄)₂), Zirconium(IV)-hydrogenphosphat (Zr(HPO₄)₂,) Zirconylnitrat (ZrO(NO₃)₂), und/oder Zirconylchlorid (ZrOCl₂), auch als deren Hydrate und/oder Schwefelsäure Addukte, als Beschleuniger auf Zirconium(IV) Basis. Überraschenderweise zeigt die Zugabe eines Beschleunigers auf Zirconium (IV) Basis in geringen Dosierungen einen mit, dem Fachmann bekannten Mengen, Lithiumsalzen vergleichbaren beschleunigenden Effekt.

Bevorzugt verwendet das schnell härtende mineralische Bindemittelmischung Zirconiumnitrat (Zr(NO₃)₄) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%, und/oder Zirconium(IV)-Sulfat (Zr(SO₄)₂ in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%, Zirconylnitrat (ZrO(NO₃)₂) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%, und/oder Zirconylchlorid (ZrOCl₂) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%, jeweils bezogen auf das Gewicht der schnell härtenden mineralischen Bindemittelmischung.

Bevorzugt wird der Beschleuniger auf Zirconium(IV) Basis als Feststoff, als wässrig-basierte Suspension, als Lösung, und/oder auf einem Träger absorbiert und/oder adsorbiert, der schnell härtenden mineralischen Bindemittelmischung zugemischt. Bevorzugt werden die Träger z.B. aus Siliciumdioxid (SiO₂), Aluminiumoxid (Al₂O₃) und/oder Titandioxid (TiO₂) ausgewählt. Bevorzugt werden weitere Feststoffe oder Beschleuniger oder Verzögerer zugegeben. Eine besonders schnell härtende mineralische Bindemittelmischung wird erzielt, wenn der erfindungsgemäßer Beschleuniger auf Zirconium(IV) Basis in die erfindungsmäßige schnell härtende mineralische Bindemittelmischung als wässrige Lösung oder als Dispersion verwendet wird. Dies kann im Öl- und Gas-Bereich von Vorteil sein, z.B. um Bohrlöcher in situ schnell zu stopfen, oder im Straßenbau, besonders im Tunnelbau, wo eine schnell härtende mineralische Bindemittelmischung an/auf die Wände eines Tunnels gespritzt bzw. aufgetragen wird.

Das Zement in der schnell härtenden mineralischen Bindemittelmischung ist bevorzugt ein Tonerdezement und/oder ein Portlandzement. Ein Fachmann wird dabei auch verstehen, dass Portlandzement auch den Sulfatträger enthalten kann.

Bevorzugt ist das Molarverhältnis Beschleuniger auf Zirconium(IV) Basis zu der Verbindung CaO in den Verbindungen (d.H., mmol Beschleuniger auf Zirconium(IV) Basis : mol Verbindung CaO in den Verbindungen) der schnell härtenden mineralischen Bindemittelmischung von 0,1 bis 300, bevorzugt 2 bis 100, besonders bevorzugt 3 bis 50.

Als Sulfatträger in der schnell härtenden mineralischen Bindemittelmischung werden bevorzugt Calciumsulfat, Magnesiumsulfat, Natriumsulfat, Kaliumsulfat, Eisensulfat, Mangansulfat, Kobaltsulfat, Nickelsulfat und/oder Kaliumperoxomonosulfat, verwendet. Besonders bevorzugt werden Calciumsulfat und/oder Magnesiumsulfat als Sulfatträger in der schnell härtenden mineralischen Bindemittelmischung verwendet. Ganz besonders bevorzugt wird Calciumsulfat als Sulfatträger verwendet. Als Sulfatträger ist dabei jede Verbindung zu verstehen, die in wässrigem Medium SO₄²⁻ Ionen zur Verfügung stellt. Sulfatträger ist z.B. ein Salz der Schwefelsäure.

Als alkalischer Aktivator in der schnell härtenden mineralischen Bindemittelmischung werden bevorzugt Portlandzement, Alkalioxide, Erdalkalioxide, Alkalihydroxide, und/oder Erdalkalihydroxide und deren Gemische verwendet.

Als Additiv in der schnell härtenden mineralischen Bindemittelmischung werden Abbindeverzögerer, Abbindebeschleuniger, dispergierbare Kunststoffpulver, Entschäumer, Hydrophobierungsmittel, Luftporenmittel, Verflüssiger, Stabilisatoren, Wasserretentionsmittel, und/oder Rheologie der Baustoffmischung beeinflussende Additive verwendet.

Bevorzugt umfasst die schnell härtende mineralische Bindemittelmischung Zement in einem Anteil von 5 bis 80 Gew.-%, Beschleuniger auf Zirconium(IV) Basis in einem Anteil von 0,001 bis 15 Gew.-%, Sulfatträger in einem Anteil von 15 bis 80 Gew.-%, alkalische Komponente in einem Anteil von 0 bis 10 Gew.-%, und Additiv in einem Anteil von 0 bis 15 Gew.-%, wobei, die Gew.-% sich jeweils auf 100 Gew.-% addieren, und die Gew.-% sich jeweils auf die schnell härtende mineralische Bindemittelmischung beziehen. Besonders bevorzugt umfasst die schnell härtende mineralische Bindemittelmischung Zement in einem Anteil von 15 bis 70 Gew.-%, Beschleuniger auf Zirconium(IV) Basis in einem Anteil von 0,1 bis 6 Gew.-%, Sulfatträger in einem Anteil von 15 bis 70 Gew.-%, alkalische Komponente in einem Anteil von 1 bis 8 Gew.-%, und Additiv in einem Anteil von 1 bis 9 Gew.-%. Ganz besonders bevorzugt umfasst die schnell härtende mineralische Bindemittelmischung Zement in einem Anteil von 25 bis 50 Gew.-%, Beschleuniger auf Zirconium(IV) Basis in einem Anteil von 0,2 bis 3 Gew.-%, Sulfatträger in einem Anteil von 25 bis 50 Gew.-%, alkalische Komponente in einem Anteil von 1,5 bis 6 Gew.-%, und Additiv in einem Anteil von 2 bis 7 Gew.-%. Ganz ganz besonders bevorzugt umfasst die schnell härtende mineralische Bindemittelmischung Beschleuniger auf Zirconium(IV) Basis in einem Anteil von 0,3 bis 1,0 Gew.-%, alkalische Komponente in einem Anteil von 2 bis 3 Gew.-%, und Additiv in einem Anteil von 3 bis 6 Gew.-%.

Bevorzugt enthält die schnell härtende mineralische Bindemittelmischung zusätzlich Lithiumsalze. Erfahrungen haben gezeigt, dass etwa die 3,5-fache Menge an Beschleuniger auf Zirconium(IV) Basis im Vergleich zu Lithiumsalzen gute Beschleunigungsergebnisse erzielt. Ziel der vorliegenden Erfindung ist es jedoch, dass die erfindungsgemäßen Beschleuniger auf Zirconium(IV) Basis die bisher üblichen Lithiumsalze ersetzen und stattdessen verwendet werden. In einer weiteren Ausführungsform umfasst die schnell härtende mineralische Bindemittelmischung keine Alkoxysilane oder Polysiloxane. Auf die Verwendung von Alkoxysilanen oder Polysiloxanen, die aufgrund der Alkoxygruppen einer intermolekularen Polykondensation unter Bildung von -Si-O-Si- Gruppen zugänglich sind, und dadurch die mechanische Festigkeit erhöhen, kann verzichtet werden.

Die vorliegende Erfindung betrifft auch die Verwendung von Zirconiumnitrat (Zr(NO₃)₄), Zirconium(IV)-Sulfat (Zr(SO₄)₂), Zirconium(IV)-hydrogenphosphat (Zr(HPO₄)₂); Zirconylnitrat (ZrO(NO₃)₂), und/oder Zirconylchlorid (ZrOCl₂), auch als deren Hydrate und/oder Schwefelsäure Addukte, als Beschleuniger für eine schnell härtende mineralische Bindemittelmischung. Bevorzugt wird die schnell härtende mineralische Bindemittelmischung in einem Baustoff verwendet. Der Baustoff gemäß der vorliegenden Erfindung umfasst bevorzugt Mörtel, Fugenmörtel, Putze, Estriche, Fließestriche, Fertigteile, Wandspachtelmasse, Bodenspachtelmasse, Pflastersteine, Terrassensteine, Bauplatten, Reparaturmörtel, Einpressmörtel, zementäre Bauklebstoffe wie Fliesenkleber, Natursteinkleber, WDV-Kleber, Ankermörtel, flexible mineralische Dichtschlämme und/oder Betone.

Mit der erfindungsmäßigen schnell härtenden mineralischen Bindemittelmischung können sämtliche hydraulisch schnell erhärtende und/oder schnell trocknende zementgebundene Baustoffe wie Mörtel, Putze, Estriche, Fließestriche, Fertigteile, Pflaster- und Terrassensteine, Bauplatten, Reparatur- und Einpressmörtel, zementäre Bauklebstoffe wie Fliesen-, Naturstein- oder WDV -Kleber, Ankermörtel und Betone formuliert werden. Die erfindungsgemäße schnell härtende mineralische Bindemittelmischung wird bevorzugt für die Herstellung von z.B. mineralischen schnell- härtenden Bauklebstoffen verwendet.

Die vorliegende Erfindung betrifft auch ein Verfahren zur Herstellung eines verarbeitungsfähigen Baustoffs, umfassend die Schritte Bereitstellung der schnell härtenden mineralischen Bindemittelmischung (wie oben beschrieben) als Feststoff, Mischung der schnell härtenden mineralischen Bindemittelmischung mit Füllstoffen und/oder Leichtfüllstoffen, um ein Trockenbaustoff zu erhalten, und Mischung des Trockenbaustoffs mit Wasser, um einen verarbeitungsfähigen Baustoff zu erhalten. Füllstoffe und/oder Leichtfüllstoffe im Sinne der vorliegenden Erfindung sind z.B. Sand, Kies, Hohlkugeln, Glasfasern, synthetische Fasern, natürliche Fasern, organische Fasern, anorganische Fasern, Polystyrolkugeln, expandiertes Polystyrol, geblähtes Vulkangestein und/oder Bimsgranulat.

Die vorliegende Erfindung betrifft auch ein Verfahren zur Herstellung eines verarbeitungsfähigen Baustoffs, umfassend die Schritte Mischen von Zirconiumnitrat (Zr(NO₃)₄), Zirconium(IV)-Sulfat (Zr(SO₄)₂), Zirconium(IV)-hydrogenphosphat (Zr(HPO₄)₂), Zirconylnitrat (ZrO(NO₃)₂) und/oder Zirconylchlorid (ZrOCl₂) mit Wasser, um eine erste Mischung zu erhalten, und Mischen der ersten Mischung mit einer Bindemittelmischung enthaltend:
- Zement enthaltend eine oder mehrere Komponenten ausgewählt aus den Verbindungen 3 CaO * Al₂O₃, 12CaO * 7Al₂O₃, CaO * Al₂O₃, CaO * 2Al₂O₃, CaO * 6Al₂O₃ und/oder 4CaO * 3Al₂O₃ * SO₃,
- einen Sulfatträger,
- Füllstoffe und/oder Leichtfüllstoffe,
- optional ein oder mehrere alkalische Komponente, und
- optional ein oder mehrere Additive,
um den verarbeitungsfähigen Baustoff zu erhalten.

Die vorliegende Erfindung betrifft auch ein Verfahren zur Herstellung eines verarbeitungsfähigen Baustoffs, umfassend die Schritte Mischen von Zirconiumnitrat (Zr(NO₃)₄), Zirconium(IV)-Sulfat (Zr(SO₄)₂), Zirconium(IV)-hydrogenphosphat (Zr(HPO₄)₂), Zirconylnitrat (ZrO(NO₃)₂) und/oder Zirconylchlorid (ZrOCl₂) mit Wasser, um eine erste Mischung zu erhalten, Mischen von Wasser mit einer Bindemittelmischung enthaltend:
- Zement enthaltend eine oder mehrere Komponenten ausgewählt aus den Verbindungen 3 CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ und/oder 4CaO ^{∗} 3Al₂O₃ ^{∗} SO₃,
- einen Sulfatträger,
- Füllstoffe und/oder Leichtfüllstoffe,
- optional mindestens eine alkalische Komponente, und
- optional mindestens ein Additiv,
um eine zweite Mischung zu erhalten, und Mischen der ersten Mischung mit der zweiten Mischung, um den verarbeitungsfähigen Baustoff zu erhalten.

Bevorzugt wird die erste Mischung in einer ersten Leitung bzw. Sprühdüse unter Druck bereitgestellt werden. Bevorzugt wird die zweite Mischung in einer zweiten Leitung bzw. Sprühdüse unter Druck bereitgestellt werden. Die erste Mischung in der ersten Leitung bzw. Sprühdüse und die zweite Mischung in der zweiten Leitung bzw. Sprühdüse können dann bevorzugt in eine dritte Leitung zusammengeführt werden oder gesprüht zusammengeführt werden, um die Mischung der ersten Mischung mit der zweiten Mischung als verarbeitungsfähigen Baustoff zu erhalten. Bevorzugt wird der verarbeitungsfähige Baustoff anschließend auftragen. Das Auftragen findet bevorzugt gleichzeitig mit oder sofort nach, vorzugsweise ≤ 20 Sekunden nach, vorzugsweise ≤ 5 Sekunden nach der Zusammenführung der ersten Mischung mit der zweiten Mischung statt.

Bevorzugt wird der verarbeitungsfähige Baustoff im Tunnelbau oder in einem 3D Betondrucker verwendet.

Die erfindungsgemäße schnell härtende mineralische Bindemittelmischung weist die Eigenschaft auf, dass eine Penetration eines konischen Penetrometers (Konus) nach 3 Stunden bevorzugt 0 mm, besonders bevorzugt nach 2 Stunden 0 mm, ganz besonders bevorzugt nach 1 Stunde 0 mm, beträgt, jeweils gemessen nach der Vicat-Kegel-Methode gemäß DIN EN 13279-2:2014-03. Eine Penetration eines konischen Penetrometers (Konus) nach 5 min. beträgt dabei bevorzugt < 10 mm, besonders bevorzugt < 5 mm, gemessen nach der Vicat-Kegel-Methode gemäß DIN EN 13279-2:2014-03.

Die erfindungsgemäße schnell härtende mineralische Bindemittelmischung weist die Eigenschaft auf, dass eine Fliese mit der Abmessung 50 mm x 50 mm x 5 mm 20 min. nach dem Aufkämmen noch eingelegt werden kann, gemessen nach EN 1348:2007.

Im Folgenden wird die vorliegende Erfindung anhand von mehreren Beispielen und darstellenden Figuren näher erläutert, ohne hierauf beschränkt zu sein. Hierbei gehen aus den Figuren und ihrer Beschreibung weitere erfindungswesentliche Merkmale und Vorteile der Erfindung hervor.
- Fig. 1.: zeigt ein typisches Vicat-Gerät mit Nadel und Freigabemechanismus.
- Fig. 2.: zeigt einen Vergleich der Vicat-Messung von Beispiel 1 (Zr1 und Zr2).
- Fig. 3.: zeigt einen Vergleich der Vicat-Messung von Beispiel 2 (Zr3 und Zr4).
- Fig. 4.: zeigt einen Vergleich der Vicat-Messung von Beispiel 3 (Zr5 und Zr6).
- Fig. 5: zeigt ein Vergleich der Vicat-Messung der Beispiele 1-3.
- Fig. 6: zeigt ein Vergleich der Vicat-Messung der Beispiele 1 (Zr2), 2 (Zr3 und Zr4),

Vergleichsbeispiel 1 (V1) ohne Beschleuniger, und Vergleichsbeispiel 2 mit Lithiumcarbonat als Beschleuniger (V2).

Alle Prozente (%) in den Figuren sind mol.-%.

Die Methoden zur Messung der oben beschriebenen Eigenschaften sind in den Beispielen angegeben.

### Beispiele

Folgende Versuchsmischungen wurden vorbereitet. Dabei wurde jeweils für 30 Sekunden Eingestreut und anschließend 45 Sekunden gemischt.
- Als Tonerdezement (Calcium Aluminat Zement) wurde Caro White der Firma Almatis GmbH verwendet.
- Als Sulfatträger wurde ein Calciumsulfat Halbhydrat der Firma Remondis SE & Co. KG verwendet.
- Als Zement wurde ein Portlandzement der Firma Spenner GmbH & Co. KG verwendet.
- Als Füller wurde ein handelsüblicher Quarzsand der Type H 31 der Firma Quarzwerke GmbH verwendet.
- Als erfindungsgemäßer Beschleuniger auf Zircon(IV)-Basis wurde Zirconium dichloride oxide octahydrate (ZrOCl₂ x 8H₂O), Zirkonium(IV)-sulfat-tetrahydrat (Zr(SO₄)₂ x 4H₂O), und Zirconyl(IV) nitrate hydrate (ZrO(NO₃)₂ x H₂O) exemplarisch verwendet.
- Als Lithium Carbonat wurde die Type Lithium Carbonat Technisch von Galaxy Lithium Ltd. verwendet.

### Beispiel 1 - ZrOCl₂

| | | **Zr1** | **Zr2** |
|---|---|---|---|
| | Einwaage (g) | M.-% | M.-% |
| Tonerdezement CAC 70 | 203,1 | 20,31 | 20,31 |
| Sulfatträger | 167,9 | 16,79 | 16,79 |
| Zement nach EN 197-1 | 30 | 3 | 3 |
| Füller | 599 | 59,9 | 59,9 |
| | 1000 | | |
| ZrOCl₂ | | 0,35 | 0,7 |

### Beispiel 2 - Zr(SO₄)₂

| | | **Zr3** | **Zr4** |
|---|---|---|---|
| | Einwaage (g) | M.-% | M.-% |
| Tonerdezement CAC 70 | 203,1 | 20,31 | 20,31 |
| Sulfatträger | 167,9 | 16,79 | 16,79 |
| Zement nach EN 197-1 | 30 | 3 | 3 |
| Füller | 599 | 59,9 | 59,9 |
| | 1000 | | |
| Zr(SO₄)₂ | | 0,35 | 0,7 |

### Beispiel 3 - Zr(NO₃)₄

| | | **Zr5** | **Zr6** |
|---|---|---|---|
| | Einwaage (g) | M.-% | M.-% |
| Tonerdlezement CAC 70 | 203,1 | 20,31 | 20,31 |
| Sulfatträger | 167,9 | 16,79 | 16,79 |
| Zement nach EN 197-1 | 30 | 3 | 3 |
| Füller | 599 | 59,9 | 59,9 |
| | 1000 | | |
| Zr(NO₃)₄ | | 0,35 | 0,7 |

Zur Bestimmung der Aushärtung und Beurteilung der Versuchsmischungen wurde die Methode nach VICAT ("Vicat-Kegel-Methode" oder "Vicat Cone Method") herangezogen, wie in DIN EN 13279-2:2014-03 näher beschrieben.

Die Vicat-Kegel-Methode ist die Standardmethode für alle vorgemischten Gipsputze, die Additive und Verzögerer enthalten. Die Vicat-Kegel-Methode verwendet die Eindringtiefe eines konischen Penetrators (Konus) in eine Gips/Wasserpaste im Verlauf des Satzes. Dieses Prinzip wird verwendet, um die anfängliche Einstellzeit zu bestimmen.

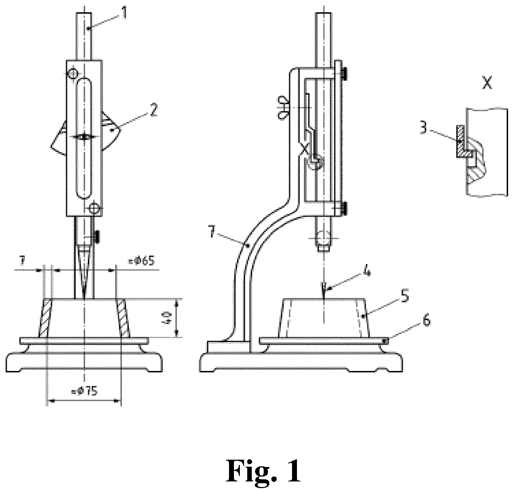

Es werden folgende Geräte verwendet:
a) Vicat-Gerät (siehe Fig. 1);
b) konischer Penetrator (Konus);
c) Glasplatte: etwa 150 mm lang und 150 mm breit;
d) Vicat-Ring;
e) eine gerade Kante von 140 mm Länge;
f) ein Chronometer; sowie
g) ein Mischer und Paddel.

Fig. 1 zeigt ein typisches Vicat-Gerät mit Nadel und Freigabemechanismus. Die Bezugsnummern haben dabei folgende Bedeutung:
1) Führungsschiene;
2) Freigabemechanismus;
3) Federplatte;
4) konischer Penetrometer (Konus);
5) Vicat-Ring;
6) Glasplatte; sowie
7) Sockel.

Der Vicat-Ring wird auf die Glasplatte gelegt, wobei die größere Öffnung in Kontakt mit der Glasplatte steht. Der Gipsputz wird mit der ermittelten Wassermenge gemischt. Die Zeit, zu der der Gips zuerst dem Wasser zugegeben wird, wird notiert (tO). Ein Übermaß an Gips wird auf den Ring übertragen. Mit einer Sägebewegung wird mit der senkrecht gehaltenen geraden Kante das überschüssige Material abgetragen. Der Konus wird mit einem Federteller des Auslösemechanismus auf die Putzoberfläche abgesenkt.

Die Führungsschiene wird zum Testen mit dem Auslösemechanismus geöffnet. Die Zeit zwischen der Konuspenetration sollte nicht größer als 1/20 der anfänglichen Abbindezeit sein. Der Kegel wird zwischen jeder Penetration gereinigt und getrocknet und zwischen jeder Penetrationsmarke sollten mindestens 12 mm liegen. Die Zeit, zu der die Eindringtiefe erreicht wurde, (22 ± 2) mm über der Glasplatte, wird notiert (t1).

Dabei wurden folgende Daten bestimmt.

### Beispiele 1-3

| | **Zr1** | **Zr2** | **Zr3** | **Zr4** | **Zr5** | **Zr6** |
|---|---|---|---|---|---|---|
| **Minuten** | **mm** | **mm** | **mm** | **mm** | **mm** | **mm** |
| 0 | 40 | 40 | 40 | 40 | 40 | 40 |
| 5 | 40 | 40 | 40 | 40 | 40 | 40 |
| 10 | 40 | 40 | 40 | 35 | 40 | 40 |
| 15 | 40 | 40 | 40 | 26 | 40 | 40 |
| 20 | 40 | 40 | 40 | 1 | 40 | 40 |
| 25 | 40 | 40 | 40 | 0 | 40 | 40 |
| 30 | 40 | 39 | 34 | 0 | 38 | 40 |
| 35 | 40 | 30 | 20 | 0 | 33 | 40 |
| 40 | 38 | 22 | 15 | 0 | 31 | 33 |
| 45 | 31 | 17 | 10 | 0 | 28 | 28 |
| 50 | 28 | 15 | 3 | 0 | 23 | 21 |
| 55 | 20 | 11 | 2 | 0 | 19 | 14 |
| 60 | 13 | 5 | 1 | 0 | 16 | 9 |
| 70 | 4 | 1 | 1 | 0 | 11 | 5 |
| 80 | 2 | 0 | 0 | 0 | 2 | 3 |
| 90 | 1 | 0 | 0 | 0 | 0 | 2 |
| 100 | 0 | 0 | 0 | 0 | 0 | 0 |

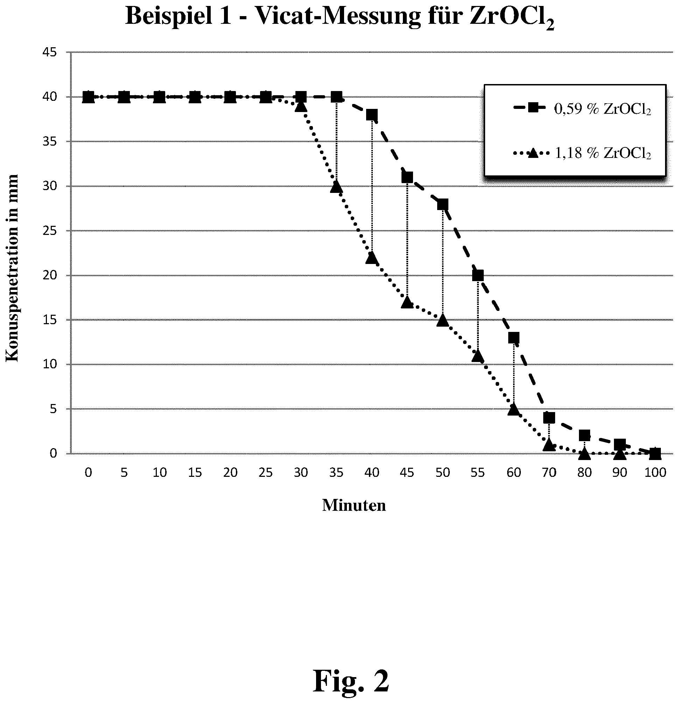

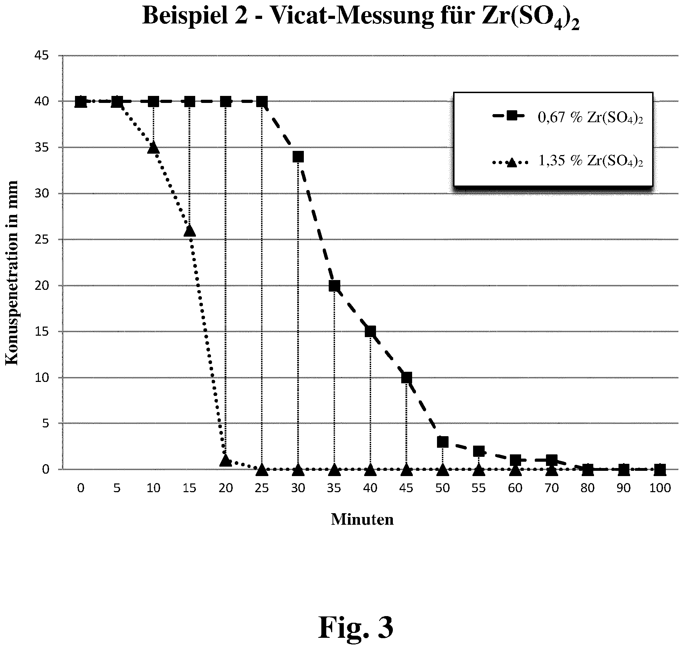

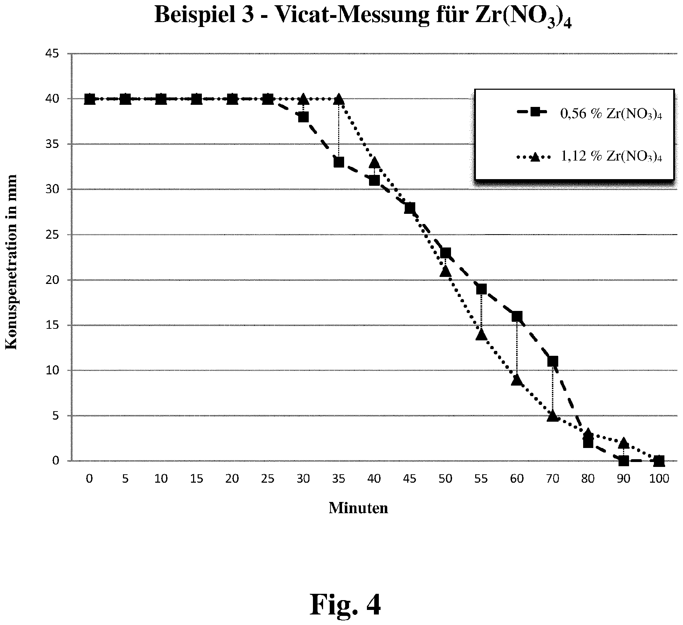

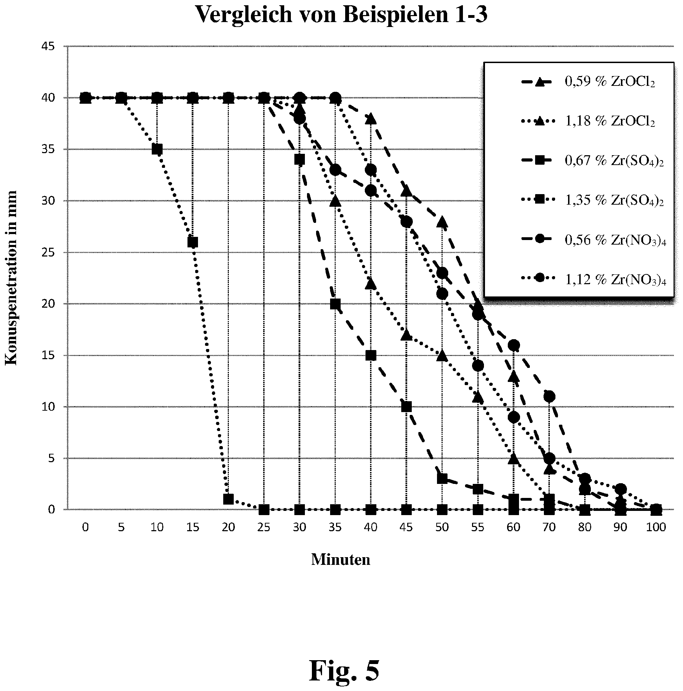

Die Figs. 2-4 zeigen die Vicat-Messung der Beispiele 1-3. Ein Vergleich der Beispiele 1-3 wird in Fig. 5 dargestellt.

Auch wurden zwei Vergleichsversuchsmischungen vorbereitet, eine ohne Beschleuniger und eine mit Lithiumcarbonat als Beschleuniger. Dabei wurde jeweils für 30 Sekunden eingestreut und anschließend 45 Sekunden gemischt.

### Vergleich

| | | **V1** | **V2** |
|---|---|---|---|
| | Einwaage (g) | M.-% | M.-% |
| Tonerdezement CAC 70 | 203,1 | 20,31 | 20,31 |
| Sulfatträger | 167,9 | 16,79 | 16,79 |
| Zement nach EN 197-1 | 30 | 3 | 3 |
| Füller | 599 | 59,9 | 59,8 |
| | 1000 | | |
| | | | |
| Li₂CO₃ | | | 0,1 |

Dabei wurden folgende Daten bestimmt.

### Vergleich

| | **V1** | **V2** |
|---|---|---|
| **Minuten** | **mm** | **mm** |
| 0 | 40 | 40 |
| 5 | 40 | 40 |
| 10 | 40 | 35 |
| 15 | 40 | 26 |
| 20 | 40 | 1 |
| 25 | 40 | 0 |
| 30 | 40 | 0 |
| 40 | 30 | 0 |
| 50 | 23 | 0 |
| 60 | 15 | 0 |

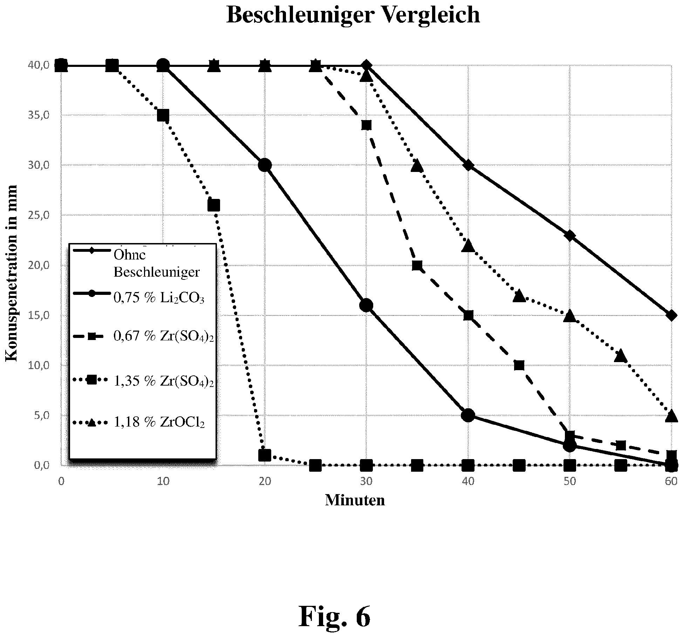

Ein Vergleich von Beispiel 1 (Zr2), Beispiel 2 (Zr3 und Zr4), Vergleichsbeispiel 1 (V1) ohne Beschleuniger und Vergleichsbeispiel 2 mit Lithiumcarbonat als Beschleuniger (V2) wird in Fig. 6 dargestellt.

Figs. 2 bis 6 zeigen deutlich, dass der erfindungsgemäße Beschleuniger auf Zirconium(IV) Basis eine Aushärtung der Versuchsmischung gegenüber einer Versuchsmischung ohne Beschleuniger auf Zirconium(IV) Basis beschleunigt. Figs. 2 bis 6 zeigen auch, dass der erfindungsgemäße Beschleuniger auf Zirconium(IV) Basis ferner eine ähnliche Aushärtungszeit erzielt wie bekannte Beschleuniger, und insbesondere Li₂CO₃.

Der erfindungsgemäße Beschleuniger auf Zirconium(IV) Basis kann auch vorteilhaft für die Herstellung von z.B. mineralischen schnell härtenden Bauklebstoffen verwendet werden.

Der Ausdruck "enthaltend" in dieser Beschreibung und in den Ansprüchen, sowie Variationen davon, bedeutet, dass die spezifizierten Merkmale, Schritte, Komponenten und/oder Zahlen enthalten/umfasst sind. "Enthaltend" ist nicht so auszulegen, dass andere Merkmale, Schritte Komponenten und/oder Zahlen ausgeschlossen sind.

## Patentansprüche

1. Schnell härtende mineralische Bindemittelmischung enthaltend:
einen Beschleuniger auf Zirconium(IV) Basis;
Zement enthaltend eine oder mehrere Komponenten ausgewählt aus den Verbindungen 3 CaO * Al₂O₃, 12CaO * 7Al₂O₃, CaO ^{∗} Al₂O₃, CaO ^{∗} 2Al₂O₃, CaO ^{∗} 6Al₂O₃ und/oder 4CaO * 3Al₂O₃ ^{∗} SO₃;
einen Sulfatträger in einem Anteil von 15 bis 80 Gew.-%, bevorzugt 25 bis 50 Gew.-%;
optional ein oder mehrere alkalische Komponente; und
optional ein oder mehrere Additive,
wobei,
das Gew.-% sich auf die schnell härtende mineralische Bindemittelmischung bezieht.

2. Schnell härtende mineralische Bindemittelmischung gemäß Anspruch 1, **dadurch gekennzeichnet, dass** Zirconiumnitrat (Zr(NO₃)₄), Zirconium(IV)-Sulfat (Zr(SO₄)₂), Zirconium(IV)-hydrogenphosphat (Zr(HPO₄)₂, Zirconylnitrat (ZrO(NO₃)₂), und/oder Zirconylchlorid (ZrOCl₂) als Beschleuniger auf Zirconium(IV) Basis verwendet wird.

3. Schnell härtende mineralische Bindemittelmischung gemäß Anspruch 2, **dadurch gekennzeichnet, dass**,
Zirconiumnitrat (Zr(NO₃)₄) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%,
Zirconium(IV)-Sulfat (Zr(SO₄)₂ in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%,
Zirconylnitrat (ZrO(NO₃)₂) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%, und/oder
Zirconylchlorid (ZrOCl₂) in einem Anteil von 0,001 bis 6 Gew.-%, bevorzugt 0,1 bis 3 Gew.-%, besonders bevorzugt 0,2 bis 1,5 Gew.-%, ganz besonders bevorzugt 0,3 bis 1,0 Gew.-%,
jeweils bezogen auf das Gewicht der schnell härtenden mineralischen Bindemittelmischung, verwendet wird.

4. Schnell härtende mineralische Bindemittelmischung gemäß einem oder mehreren der Ansprüche 1 bis 3, **dadurch gekennzeichnet, dass** der Zirconium(IV)-Beschleuniger,
als Feststoff,
als wässrig-basierte Suspension,
als Lösung, und/oder
auf einem Träger absorbiert,
der schnell härtenden mineralischen Bindemittelmischung zugemischt wird.

5. Schnell härtende mineralische Bindemittelmischung gemäß einem oder mehreren der Ansprüche 1 bis 4, **dadurch gekennzeichnet, dass** das Zement ein Tonerdezement und/oder Portlandzement ist.

6. Schnell härtende mineralische Bindemittelmischung gemäß einem oder mehreren der Ansprüche 1 bis 5, **dadurch gekennzeichnet, dass** das Molarverhältnis Beschleuniger auf Zirconium(IV) Basis zu der Verbindung CaO in den Verbindungen (mmol Beschleuniger auf Zirconium(IV) Basis : mol Verbindung CaO in den Verbindungen) von 0,1 bis 300, bevorzugt 2 bis 100, besonders bevorzugt 3 bis 50, ist.

7. Schnell härtende mineralische Bindemittelmischung gemäß einem oder mehreren der Ansprüche 1 bis 6, **dadurch gekennzeichnet, dass** Calciumsulfat, Magnesiumsulfat, Natriumsulfat, Kaliumsulfat, Eisensulfat, Mangansulfat, Kobaltsulfat, Nickelsulfat und/oder Kaliumperoxomonosulfat, bevorzugt Calciumsulfat und/oder Magnesiumsulfat, als Sulfatträger verwendet wird.

8. Schnell härtende mineralische Bindemittelmischung gemäß einem oder mehreren der Ansprüche 1 bis 7, **dadurch gekennzeichnet, dass** als alkalischer Aktivator Portlandzement, Alkalioxide, Erdalkalioxide, Alkalihydroxide, und/oder Erdalkalihydroxide und deren Gemische verwendet werden.

9. Schnell härtende mineralische Bindemittelmischung gemäß einem oder mehreren der Ansprüche 1 bis 8, **dadurch gekennzeichnet, dass** als Additiv Abbindeverzögerer, Abbindebeschleuniger, dispergierbare Kunststoffpulver, Entschäumer, Hydrophobierungsmittel, Luftporenmittel, Verflüssiger, Stabilisatoren, Wasserretentionsmittel, und/oder Rheologie der Baustoffmischung beeinflussende Additive verwendet werden.

10. Schnell härtende mineralische Bindemittelmischung gemäß einem oder mehreren der Ansprüche 1 bis 9, **dadurch gekennzeichnet, dass** die mineralische Bindemittelmischung umfasst:
Zement in einem Anteil von 5 bis 80 Gew.-%, bevorzugt 15 bis 70 Gew.-%, besonders bevorzugt 25 bis 50 Gew.-%;
Beschleuniger auf Zirconium(IV) Basis in einem Anteil von 0,001 bis 15 Gew.-%, bevorzugt 0,1 bis 6 Gew.-%, besonders bevorzugt 0,2 bis 3 Gew.-%, ganz besonders bevorzugt 0,3 bis 1,0 Gew.-%;
Sulfatträger in einem Anteil von 15 bis 80 Gew.-%, bevorzugt 25 bis 50 Gew.-%;
alkalische Komponente in einem Anteil von 0 bis 10 Gew.-%, bevorzugt 1 bis 8 Gew.-%, besonders bevorzugt 1,5 bis 6 Gew.-%, ganz besonders bevorzugt 2 bis 3 Gew.-%; und
Additiv in einem Anteil von 0 bis 15 Gew.-%, bevorzugt 1 bis 9 Gew.-%, besonders bevorzugt 2 bis 7 Gew.-%, ganz besonders bevorzugt 3 bis 6 Gew.-%,
wobei,
die Gew.-% sich jeweils auf 100 Gew.-% addieren, und
die Gew.-% sich jeweils auf die schnell härtende mineralische Bindemittelmischung beziehen.

11. Schnell härtende mineralische Bindemittelmischung gemäß einem oder mehreren der Ansprüche 1 bis 10, **dadurch gekennzeichnet, dass** die schnell härtende mineralische Bindemittelmischung zusätzlich Lithiumsalze enthält.

12. Verwendung von Zirconiumnitrat (Zr(NO₃)₄), Zirconium(IV)-Sulfat (Zr(SO₄)₂), Zirconium(IV)-hydrogenphosphat (Zr(HPO₄)₂, Zirconylnitrat (ZrO(NO₃)₂) und/oder Zirconylchlorid (ZrOCl₂) als Beschleuniger für eine schnell härtende mineralische Bindemittelmischung gemäß einem oder mehreren der Ansprüche 1 bis 11.

13. Verwendung der schnell härtenden mineralischen Bindemittelmischung gemäß einem oder mehreren der Ansprüche 1 bis 11 in einem Baustoff.

14. Verwendung der schnell härtenden mineralischen Bindemittelmischung gemäß Anspruch 13, **dadurch gekennzeichnet, dass** der Baustoff Mörtel, Fugenmörtel, Putze, Estriche, Fließestriche, Fertigteile, Wandspachtelmasse, Bodenspachtelmasse, Pflastersteine, Terrassensteine, Bauplatten, Reparaturmörtel, Einpressmörtel, zementäre Bauklebstoffe wie Fliesenkleber, Natursteinkleber, WDV-Kleber, Ankermörtel, flexible mineralische Dichtschlämme und/oder Betone umfasst.

15. Verfahren zur Herstellung eines verarbeitungsfähigen Baustoffs, umfassend die Schritte:
Bereitstellung der schnell härtenden mineralischen Bindemittelmischung gemäß einem oder mehreren der Ansprüche 1 bis 11 als Feststoff;
Mischung der schnell härtenden mineralischen Bindemittelmischung mit Füllstoffen und/oder Leichtfüllstoffen, um ein Trockenbaustoff zu erhalten; und
Mischung des Trockenbaustoffs mit Wasser, um einen verarbeitungsfähigen Baustoff zu erhalten.

16. Verfahren zur Herstellung eines verarbeitungsfähigen Baustoffs, umfassend die Schritte:
Mischen von Zirconiumnitrat (Zr(NO₃)₄), Zirconium(IV)-Sulfat (Zr(SO₄)₂), Zirconium(IV)-hydrogenphosphat (Zr(HPO₄)₂, Zirconylnitrat (ZrO(NO₃)₂) und/oder Zirconylchlorid (ZrOCl₂) mit Wasser, um eine erste Mischung zu erhalten; und
Mischen der ersten Mischung mit einer Bindemittelmischung enthaltend:
• Zement enthaltend eine oder mehrere Komponenten ausgewählt aus den Verbindungen 3 CaO ^{∗} Al₂O₃, 12CaO * 7Al₂O₃, CaO ^{∗} Al₂O₃, CaO * 2Al₂O₃, CaO * 6Al₂O₃ und/oder 4CaO * 3Al₂O₃ * SO₃,
• einen Sulfatträger in einem Anteil von 15 bis 80 Gew.-%, bevorzugt 25 bis 50 Gew.-%,
• Füllstoffe und/oder Leichtfüllstoffe,
• optional ein oder mehrere alkalische Komponente, und
• optional ein oder mehrere Additive,
um den verarbeitungsfähigen Baustoff zu erhalten.

17. Verfahren zur Herstellung eines verarbeitungsfähigen Baustoffs, umfassend die Schritte:
Mischen von Zirconiumnitrat (Zr(NO₃)₄), Zirconium(IV)-Sulfat (Zr(SO₄)₂), Zirconium(IV)-hydrogenphosphat (Zr(HPO₄)₂, Zirconylnitrat (ZrO(NO₃)₂) und/oder Zirconylchlorid (ZrOCl₂) mit Wasser, um eine erste Mischung zu erhalten;
Mischen von Wasser mit einer Bindemittelmischung enthaltend:
• Zement enthaltend eine oder mehrere Komponenten ausgewählt aus den Verbindungen 3 CaO * Al₂O₃, 12CaO * 7Al₂O₃, CaO * Al₂O₃, CaO * 2Al₂O₃, CaO * 6Al₂O₃ und/oder 4CaO ^{∗} 3Al₂O₃ * SO₃,
• einen Sulfatträger in einem Anteil von 15 bis 80 Gew.-%, bevorzugt 25 bis 50 Gew.-%,
• Füllstoffe und/oder Leichtfüllstoffe,
• optional mindestens eine alkalische Komponente, und
• optional mindestens ein Additiv,
um eine zweite Mischung zu erhalten; und
Mischen der ersten Mischung mit der zweiten Mischung, um den verarbeitungsfähigen Baustoff zu erhalten.

18. Verwendung eines nach den Ansprüchen 15-17 definierten Verfahrens hergestellten verarbeitungsfähigen Baustoffs im Tunnelbau oder in einem 3D Betondrucker.

## Claims

1. A fast-curing mineral binder mixture comprising:
a zirconium(IV)-based accelerator;
cement comprising one or more components selected from the compounds 3CaO * Al₂O₃, 12CaO * 7Al₂O₃, CaO * Al₂O₃, CaO * 2Al₂O₃, CaO * 6Al₂O₃ and/or 4CaO * 3Al₂O₃ * SO₃;
a sulfate carrier in a fraction of 15 to 80 wt%, preferably 25 to 50 wt%;
optionally one or more than one alkaline component; and
optionally one or more additives,
where
the wt% is based on the fast-curing mineral binder mixture.

2. The fast-curing mineral binder mixture as claimed in claim 1, **characterized in that** zirconium nitrate (Zr(NO₃)₄), zirconium(IV) sulfate (Zr(SO₄)₂), zirconium(IV) hydrogen phosphate (Zr(HPO₄)₂, zirconyl nitrate (ZrO(NO₃)₂), and/or zirconyl chloride (ZrOCl₂) is used as zirconium(IV)-based accelerator.

3. The fast-curing mineral binder mixture as claimed in claim 2, **characterized in that**
zirconium nitrate (Zr(NO₃)₄) in a fraction of 0.001 to 6 wt%, preferably 0.1 to 3 wt%, more preferably 0.2 to 1.5 wt%, very preferably 0.3 to 1.0 wt%,
zirconium(IV) sulfate (Zr(SO₄)₂) in a fraction of 0.001 to 6 wt%, preferably 0.1 to 3 wt%, more preferably 0.2 to 1.5 wt%, very preferably 0.3 to 1.0 wt%,
zirconyl nitrate (ZrO(NO₃)₂) in a fraction of 0.001 to 6 wt%, preferably 0.1 to 3 wt%, more preferably 0.2 to 1.5 wt%, very preferably 0.3 to 1.0 wt%, and/or
zirconyl chloride (ZrOCl₂) in a fraction of 0.001 to 6 wt%, preferably 0.1 to 3 wt%, more preferably 0.2 to 1.5 wt%, very preferably 0.3 to 1.0 wt%,
based in each case on the weight of the fast-curing mineral binder mixture, is used.

4. The fast-curing mineral binder mixture as claimed in one or more of claims 1 to 3, **characterized in that** the zirconium(IV) accelerator is admixed
as a solid,
as an aqueous-based suspension,
as a solution, and/or
absorbed on a carrier
to the fast-curing mineral binder mixture.

5. The fast-curing mineral binder mixture as claimed in one or more of claims 1 to 4, **characterized in that** the cement is a high-alumina cement and/or portland cement.

6. The fast-curing mineral binder mixture as claimed in one or more of claims 1 to 5, **characterized in that** the molar ratio of zirconium(IV)-based accelerator to the compound CaO in the compounds (mmol of zirconium(IV)-based accelerator : mol of compound CaO in the compounds) is from 0.1 to 300, preferably 2 to 100, more preferably 3 to 50.

7. The fast-curing mineral binder mixture as claimed in one or more of claims 1 to 6, **characterized in that** calcium sulfate, magnesium sulfate, sodium sulfate, potassium sulfate, iron sulfate, manganese sulfate, cobalt sulfate, nickel sulfate and/or potassium peroxomonosulfate, preferably calcium sulfate and/or magnesium sulfate, is used as sulfate carrier.

8. The fast-curing mineral binder mixture as claimed in one or more of claims 1 to 7, **characterized in that** alkaline activator used comprises portland cement, alkali metal oxides, alkaline earth metal oxides, alkali metal hydroxides and/or alkaline earth metal hydroxides and mixtures thereof.

9. The fast-curing mineral binder mixture as claimed in one or more of claims 1 to 8, **characterized in that** additive used comprises setting retarders, setting accelerators, dispersible plastics powders, defoamers, water repellents, air entrainers, plasticizers, stabilizers, water retention agents and/or additives influencing building material mixture rheology.

10. The fast-curing mineral binder mixture as claimed in one or more of claims 1 to 9, **characterized in that** the mineral binder mixture comprises:
cement in a fraction of 5 to 80 wt%, preferably 15 to 70 wt%, more preferably 25 to 50 wt%;
zirconium(IV)-based accelerator in a fraction of 0.001 to 15 wt%, preferably 0.1 to 6 wt%, more preferably 0.2 to 3 wt%, very preferably 0.3 to 1.0 wt%;
sulfate carrier in a fraction of 15 to 80 wt%, preferably 25 to 50 wt%;
alkaline component in a fraction of 0 to 10 wt%, preferably 1 to 8 wt%, more preferably 1.5 to 6 wt%, very preferably 2 to 3 wt%; and
additive in a fraction of 0 to 15 wt%, preferably 1 to 9 wt%, more preferably 2 to 7 wt%, very preferably 3 to 6 wt%,
where
the wt% add up in each case to 100 wt%, and
the wt% are based in each case on the fast-curing mineral binder mixture.

11. The fast-curing mineral binder mixture as claimed in one or more of claims 1 to 10, **characterized in that** the fast-curing mineral binder mixture additionally comprises lithium salts.

12. The use of zirconium nitrate (Zr(NO₃)₄), zirconium(IV) sulfate (Zr(SO₄)₂), zirconium(IV) hydrogen phosphate (Zr(HPO₄)₂, zirconyl nitrate (ZrO(NO₃)₂) and/or zirconyl chloride (ZrOCl₂) as accelerator for a fast-curing mineral binder mixture as claimed in one or more of claims 1 to 11.

13. The use of the fast-curing mineral binder mixture as claimed in one or more claims 1 to 11 in a building material.

14. The use of the fast-curing mineral binder mixture, as claimed in claim 13, **characterized in that** the building material comprises mortars, jointing mortars, renders, screeds, self-leveling screeds, prefabricated parts, wall-filling compound, floor-filling compound, paving stones, patio stones, building slabs, repair mortars, injection mortars, cementitious building adhesives such as tile adhesives, natural stone adhesives, EIFS adhesives, anchoring mortars, flexible mineral grouts and/or concretes.

15. A method for producing a workable building material, comprising the steps of:
providing the fast-curing mineral binder mixture as claimed in one or more of claims 1 to 11 as a solid;
mixing the fast-curing mineral binder mixture with regular fillers and/or lightweight fillers, to give a dry building material; and
mixing the dry building material with water, to give a workable building material.

16. A method for producing a workable building material, comprising the steps of:
mixing zirconium nitrate (Zr(NO₃)₄), zirconium(IV) sulfate (Zr(SO₄)₂), zirconium(IV) hydrogen phosphate (Zr(HPO₄)₂, zirconyl nitrate (ZrO(NO₃)₂) and/or zirconyl chloride (ZrOCl₂) with water, to give a first mixture; and
mixing the first mixture with a binder mixture comprising:
• cement comprising one or more components selected from the compounds 3CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ and/or 4CaO ^{∗} 3Al₂O₃ ^{∗} SO₃,
• a sulfate carrier in a fraction of 15 to 80 wt%, preferably 25 to 50 wt%,
• regular fillers and/or lightweight fillers,
• optionally one or more alkaline component, and
• optionally one or more additives,
to give the workable building material.

17. A method for producing a workable building material, comprising the steps of:
mixing zirconium nitrate (Zr(NO₃)₄), zirconium(IV) sulfate (Zr(SO₄)₂), zirconium(IV) hydrogen phosphate (Zr(HPO₄)₂, zirconyl nitrate (ZrO(NO₃)₂) and/or zirconyl chloride (ZrOCl₂) with water, to give a first mixture;
mixing water with a binder mixture comprising:
• cement comprising one or more components selected from the compounds 3CaO ^{∗} Al₂O₃, 12CaO ^{∗} 7Al₂O₃, CaO ^{∗} Al₂O₃, CaO ^{∗} 2Al₂O₃, CaO ^{∗} 6Al₂O₃ and/or 4CaO ^{∗} 3Al₂O₃ ^{∗} SO₃,
• a sulfate carrier in a fraction of 15 to 80 wt%, preferably 25 to 50 wt%,
• regular fillers and/or lightweight fillers,
• optionally at least one alkaline component, and
• optionally at least one additive,
to give a second mixture; and
mixing the first mixture with the second mixture, to give the workable building material.

18. The use of a workable building material produced by a method defined as claimed in claims 15-17 in tunnel construction or in a 3D concrete printer.

## Revendications

1. Composition de liant minéral à durcissement rapide contenant :
un accélérateur à base de zirconium(IV) ;
du ciment contenant un ou plusieurs composants choisis parmi les composés 3CaO * Al₂O₃, 12CaO * 7Al₂O₃, CaO * Al₂O₃, CaO * 2Al₂O₃, CaO * 6Al₂O₃ et/ou 4CaO * 3Al₂O₃ * SO₃ ;
un porteur de sulfate en une proportion de 15 à 80 % en poids, de préférence 25 à 50 % en poids ;
en option un ou plusieurs composants alcalins ; et
en option un ou plusieurs additifs,
le % en poids se rapportant à la composition de liant minéral à durcissement rapide.

2. Composition de liant minéral à durcissement rapide selon la revendication 1, **caractérisée en ce qu'**en tant qu'accélérateur à base de zirconium(IV) on utilise du nitrate de zirconium (Zr(NO₃)₄), du sulfate de zirconium(IV) (Zr(SO₄)₂), de l'hydrogénophosphate de zirconium(IV) (Zr(HPO₄)₂), du nitrate de zirconyle (ZrO(NO₃)₂), et/ou du chlorure de zirconyle (ZrOCl₂) .

3. Composition de liant minéral à durcissement rapide selon la revendication 2, **caractérisée en ce qu'**on utilise
du nitrate de zirconium (Zr(NO₃)₄) en une proportion de 0,001 à 6 % en poids, de préférence 0,1 à 3 % en poids, de façon particulièrement préférée 0,2 à 1,5 % en poids, de façon tout particulièrement préférée 0,3 à 1,0 % en poids,
du sulfate de zirconium(IV) (Zr(SO₄)₂) en une proportion de 0,001 à 6 % en poids, de préférence 0,1 à 3 % en poids, de façon particulièrement préférée 0,2 à 1,5 % en poids, de façon tout particulièrement préférée 0,3 à 1,0 % en poids,
du nitrate de zirconyle (ZrO(NO₃)₂) en une proportion de 0,001 à 6 % en poids, de préférence 0,1 à 3 % en poids, de façon particulièrement préférée 0,2 à 1,5 % en poids, de façon tout particulièrement préférée 0,3 à 1,0 % en poids, et/ou
du chlorure de zirconyle (ZrOCl₂) en une proportion de 0,001 à 6 % en poids, de préférence 0,1 à 3 % en poids, de façon particulièrement préférée 0,2 à 1,5 % en poids, de façon tout particulièrement préférée 0,3 à 1,0 % en poids,
chaque fois par rapport au poids de la composition de liant minéral à durcissement rapide.

4. Composition de liant minéral à durcissement rapide selon une ou plusieurs des revendications 1 à 3, **caractérisée en ce que** l'accélérateur à base de zirconium(IV) est incorporé à la composition de liant minéral à durcissement rapide,
sous forme de solide,
sous forme de suspension à base aqueuse,
sous forme de solution, et/ou
absorbé sur un support.

5. Composition de liant minéral à durcissement rapide selon une ou plusieurs des revendications 1 à 4, **caractérisée en ce que** le ciment est un ciment alumineux et/ou un ciment Portland.

6. Composition de liant minéral à durcissement rapide selon une ou plusieurs des revendications 1 à 5, **caractérisée en ce que** le rapport molaire de l'accélérateur à base de zirconium(IV) au composé CaO dans les associations (mmole d'accélérateur à base de zirconium(IV) : mole de composé CaO dans les associations) vaut de 0,1 à 300, de préférence 2 à 100, de façon particulièrement préférée 3 à 50.

7. Composition de liant minéral à durcissement rapide selon une ou plusieurs des revendications 1 à 6, **caractérisée en ce qu'**en tant que porteur de sulfate on utilise du sulfate de calcium, du sulfate de magnésium, du sulfate de sodium, du sulfate de potassium, du sulfate de fer, du sulfate de manganèse, du sulfate de cobalt, du sulfate de nickel et/ou du peroxomonosulfate de potassium, de préférence du sulfate de calcium et/ou du sulfate de magnésium.

8. Composition de liant minéral à durcissement rapide selon une ou plusieurs des revendications 1 à 7, **caractérisée en ce qu'**en tant qu'activateur alcalin on utilise du ciment Portland, des oxydes de métaux alcalins, des oxydes de métaux alcalino-terreux, des hydroxydes de métaux alcalins et/ou des hydroxydes de métaux alcalino-terreux ou des mélanges de ceux-ci.

9. Composition de liant minéral à durcissement rapide selon une ou plusieurs des revendications 1 à 8, **caractérisée en ce qu'**en tant qu'additif on utilise des retardateurs de prise, des accélérateurs de prise, des poudres de matière plastique dispersables, des antimousses, des agents d'hydrophobie, des agents aérateurs, des fluidifiants, des stabilisants, des agents de rétention d'eau, et/ou des additifs agissant sur la rhéologie de la composition de matériau de construction.

10. Composition de liant minéral à durcissement rapide selon une ou plusieurs des revendications 1 à 9, **caractérisée en ce que** la composition de liant minéral comprend :
du ciment en une proportion de 5 à 80 % en poids, de préférence 15 à 70 % en poids, de façon particulièrement préférée 25 à 50 % en poids ;
un accélérateur à base de zirconium(IV) en une proportion de 0,001 à 15 % en poids, de préférence 0,1 à 6 % en poids, de façon particulièrement préférée 0,2 à 3 % en poids, de façon tout particulièrement préférée 0,3 à 1,0 % en poids ;
un porteur de sulfate en une proportion de 15 à 80 % en poids, de préférence 25 à 50 % en poids ;
un composant alcalin en une proportion de 0 à 10 % en poids, de préférence 1 à 8 % en poids, de façon particulièrement préférée 1,5 à 6 % en poids, de façon tout particulièrement préférée 2 à 3 % en poids ; et
un additif en une proportion de 0 à 15 % en poids, de préférence 1 à 9 % en poids, de façon particulièrement préférée 2 à 7 % en poids, de façon tout particulièrement préférée 3 à 6 % en poids,
la somme des % en poids étant chaque fois égale à 100 % en poids, et
les % en poids se rapportant chaque fois à la composition de liant minéral à durcissement rapide.

11. Composition de liant minéral à durcissement rapide selon une ou plusieurs des revendications 1 à 10, **caractérisée en ce que** la composition de liant minéral à durcissement rapide contient en outre des sels de lithium.

12. Utilisation de nitrate de zirconium (Zr(NO₃)₄), sulfate de zirconium(IV) (Zr(SO₄)₂), hydrogénophosphate de zirconium(IV) (Zr(HPO₄)₂), nitrate de zirconyle (ZrO(NO₃)₂) et/ou chlorure de zirconyle (ZrOCl₂) en tant qu'accélérateur pour une composition de liant minéral à durcissement rapide selon une ou plusieurs des revendications 1 à 11.

13. Utilisation de la composition de liant minéral à durcissement rapide selon une ou plusieurs des revendications 1 à 11 dans un matériau de construction.

14. Utilisation de la composition de liant minéral à durcissement rapide selon la revendication 13, **caractérisée en ce que** le matériau de construction comprend des mortiers, des mortiers à joints, des enduits, des chapes, des chapes fluides, des éléments préfabriqués, un mastic pour murs, un mastic pour sols, des pavés, des dalles de terrasses, des panneaux muraux, des mortiers de réparation, des mortiers d'injection, des adhésifs à base de ciment utilisés pour la construction, tels que des colles à carrelage, des colles pour pierres naturelles, des colles pour isolation thermique WDV, des mortiers d'ancrage, des enduits d'étanchéité minéraux flexibles et/ou des bétons.

15. Procédé pour la production d'un matériau de construction prêt à la mise en oeuvre, comprenant les étapes :
fourniture de la composition de liant minéral à durcissement rapide selon une ou plusieurs des revendications 1 à 11 en tant que matière solide ;
mélange de la composition de liant minéral à durcissement rapide avec des charges et/ou des charges légères, afin d'obtenir un matériau de construction sec ; et
mélange du matériau de construction sec avec de l'eau, afin d'obtenir un matériau de construction prêt à la mise en oeuvre.

16. Procédé pour la production d'un matériau de construction prêt à la mise en oeuvre, comprenant les étapes :
mélange de nitrate de zirconium (Zr(NO₃)₄), sulfate de zirconium(IV) (Zr(SO₄)₂), hydrogénophosphate de zirconium(IV) (Zr(HPO₄)₂), nitrate de zirconyle (ZrO(NO₃)₂) et/ou chlorure de zirconyle (ZrOCl₂) avec de l'eau, afin d'obtenir un premier mélange ; et
mélange du premier mélange avec une composition de liant contenant :
• du ciment contenant un ou plusieurs composants choisis parmi les composés 3CaO * Al₂O₃, 12CaO * 7Al₂O₃, CaO * Al₂O₃, CaO * 2Al₂O₃, CaO * 6Al₂O₃ et/ou 4CaO * 3Al₂O₃ * SO₃,
• un porteur de sulfate en une proportion de 15 à 80 % en poids, de préférence 25 à 50 % en poids,
• des charges et/ou des charges légères,
• en option un ou plusieurs composants alcalins, et
• en option un ou plusieurs additifs,
afin d'obtenir le matériau de construction prêt à la mise en oeuvre.

17. Procédé pour la production d'un matériau de construction prêt à la mise en oeuvre, comprenant les étapes :
mélange de nitrate de zirconium (Zr(NO₃)₄), sulfate de zirconium(IV) (Zr(SO₄)₂), hydrogénophosphate de zirconium(IV) (Zr(HPO₄)₂), nitrate de zirconyle (ZrO(NO₃)₂) et/ou chlorure de zirconyle (ZrOCl₂) avec de l'eau, afin d'obtenir un premier mélange ;
mélange d'eau avec une composition de liant contenant :
• du ciment contenant un ou plusieurs composants choisis parmi les composés 3CaO * Al₂O₃, 12CaO * 7Al₂O₃, CaO * Al₂O₃, CaO * 2Al₂O₃, CaO * 6Al₂O₃ et/ou 4CaO * 3Al₂O₃ * SO₃,
• un porteur de sulfate en une proportion de 15 à 80 % en poids, de préférence 25 à 50 % en poids,
• des charges et/ou des charges légères,
• en option au moins un composant alcalin, et
• en option au moins un additif,
afin d'obtenir un deuxième mélange ; et
mélange du premier mélange avec le deuxième mélange, afin d'obtenir le matériau de construction prêt à la mise en oeuvre.

18. Utilisation d'un matériau de construction prêt à la mise en oeuvre, produit selon le procédé défini dans les revendications 15-17, dans la construction de tunnels ou dans une imprimante 3D béton.
